(19) Europäisches Patentamt

European Patent Office

Office européen des brevets

(11) Veröffentlichungsnummer: **0 379 839 B1**

# (12) EUROPÄISCHE PATENTSCHRIFT

(45) Veröffentlichungstag der Patentschrift: **15.09.93**

(21) Anmeldenummer: **89810926.9**

(22) Anmeldetag: **08.12.89**

(51) Int. Cl.⁵: **G01L 21/22**, G01L 19/04

㊹ **Stimmgabel-Ouarz-Manometer.**

(30) Priorität: **23.01.89 CH 204/89**

(43) Veröffentlichungstag der Anmeldung:
**01.08.90 Patentblatt 90/31**

(45) Bekanntmachung des Hinweises auf die
Patenterteilung:
**15.09.93 Patentblatt 93/37**

(84) Benannte Vertragsstaaten:
**AT BE CH DE ES FR GB IT LI LU NL SE**

(56) Entgegenhaltungen:
**EP-A- 0 233 054**
**EP-A- 0 273 649**
**DE-A- 3 640 242**

(73) Patentinhaber: **BALZERS AKTIENGESELL-
SCHAFT**

**FL-9496 Balzers(LI)**

(72) Erfinder: **Stocker, Rudolf, Dr.**
**Langacker**
**CH-9478 Azmoos(CH)**

(74) Vertreter: **Frei, Alexandra Sarah**
**Frei Patentanwaltsbüro Hedwigsteig 6 Postfach 95**
**CH-8029 Zürich (CH)**

EP 0 379 839 B1

**Beschreibung**

Die Erfindung bezieht sich auf ein Stimmgabelquarz-Manometer gemäss dem Oberbegriff des Patentanspruches 1.

Die Verwendung von Quarzkristallen bzw. Stimmgabelquarz-Schwingern in Gasreibungs-Manometern ist bekannt. Grundsätzlich können für solche Anwendungen zwei Messeffekte ausgenutzt werden, da in Abhängigkeit des Umgebungsdrukkes solche Quarz-Schwinger sowohl eine Frequenzabhängigkeit aufweisen als auch eine Dämpfung erfahren. Für eine gute Messgenauigkeit in niederen Druckbereichen (Druck < 1 mbar) wird die Dämpfung des Schwingquarzes vorzugsweise durch *Messung des Widerstandes* bei Resonanzfrequenz bestimmt, da die druckabhängige *Änderung der Resonanzfrequenz* bei tiefen Drücken zu gering ist, um messtechnisch sinnvoll ausgewertet zu werden.

Aus der europäischen Patentanmeldung EP 0 233 054 ist ein Gasdrucksensor bekannt, der einen Stimmgabelquarz der Messumgebung aussetzt. Dabei wird das obenerwähnte Prinzip der Widerstandsmessung des Stimmgabelquarzes bei Resonanzfrequenz verwendet. Mittels eines phasengekoppelten elektrischen Schwingungssystems (PLL-Schaltung) sowie einer Auswertschaltung wird diese Änderung des Quarzwiderstandes gemessen und in geeigneter Weise angezeigt.

Obwohl das entsprechende Messprinzip seit geraumer Zeit bekannt ist, wurde der praktische Einsatz solcher Stimmgabelquarz-Sensoren bisher durch verschiedenste Probleme eingeschränkt bzw. verunmöglicht. Ein Hauptproblem bei dieser Messmethode besteht darin, dass der gemessene Dämpfungswert nicht nur druck- sondern auch temperaturabhängig ist. Bei hohen Drücken (> 1 mbar) ist diese Tatsache vernachlässigbar. Bei niederen Drücken kann die Temperaturabhängigkeit die gewünschte Messung jedoch stark beeinträchtigen. Um die Störeffekte zu verringern wurden verschiedene Möglichkeiten vorgeschlagen. So verwendet bspw. die Vorrichtung gemäss EP 0 233 054 einen speziell zugeschnittenen Schwingquarz um die Temperatureinflüsse möglichst gering zu halten. Es wurde ausserdem vorgeschlagen, im Zusammenhang mit Stimmgabelquarzen einen NTC-Widerstand zu verwenden, der in Serie geschaltet eine temperaturmässige Kompensation bewirkt (vgl. EP 0 180 297). Eine weitere Möglichkeit besteht darin, den Quarz zu thermostatisieren (vgl. Hirata M. et al., J. Vac.Sci.Technol. A5, 2393 (1987)).

Ein wesentliches Problem liegt ausserdem in der durch die Halterung des Quarzes bewirkten Dämpfung des Stimmgabelquarzes. Eine schlecht definierte Halterung führt zu unbestimmten bzw. nicht reproduzierbaren Messwerten. Ausserdem wird im Stimmgabelquarz nur eine sehr geringe Leistung umgesetzt. Dies macht die Messung sehr störanfällig, wobei solche Störungen insbesondere auch durch die Verhältnisse im Messvolumen bewirkt werden können. Von wesentlicher Bedeutung sind auch direkte, auf den Quarz einwirkenden Gasstösse oder Verschmutzungspartikel, die eine geeignete Anordnung des Quarzes erforderlich machen.

Die in der Patentanmeldung EP 0 233 054 vorgeschlagene Massnahme einer speziellen Quarzgeometrie kann zwar zu einer Verbesserung der Messeigenschaften des Quarzes führen, jedoch den praktischen Anforderungen nicht genügen. Die Verwendung solcher Spezialquarze führt ausserdem zu höheren Herstellungskosten, da grundsätzlich die üblichen und günstigen Stimmgabelquarze, wie sie als zeithaltende Elemente in Uhren Anwendung finden, verwendet werden könnten.

Eine Kompensation der Temperatureinflüsse mittels einem zum Quarzoszillator in Serie geschalteten NTC-Widerstand, wie in EP 0 180 297 vorgeschlagen, führt nur zu ungenügenden Resultaten, da nur wenige Freiheitsgrade für die Kompensation bestehen und insbesondere Anteile höherer Ordnung unkompensiert bleiben. Eine Thermostatisierung führt andererseits zu einem sehr grossen, unverhältnismässigem Aufwand. Insgesamt zeigt sich, dass bisherige Lösungsvorschläge nur eine sehr beschränkte Fehlerkompensation bewerkstelligen und darüber hinaus sehr aufwendig sind.

Unberücksichtigt blieb bei üblichen Dämpfungsmessschaltungen, bspw. bei der Schaltung im US-Patent 4.507.970, dass die Ausgangsgrösse im wesentlichen linear von der Dämpfung abhängt. Da bei der Vakuummessung im allgemeinen eine konstante *relative* Genauigkeit über den zu messenden Druckbereich erwünscht ist, sind bei den üblichen Schaltungen bei der Messung niedriger Drükke sehr kleine Dämpfungs- und damit Ausgangsgrössenänderungen aufzulösen. Daraus ergibt sich eine zusätzliche, grosse Störempfindlichkeit bei tiefen Drücken.

Es ist Aufgabe der Erfindung, ein Stimmgabelquarz-Manometer zu schaffen, das bei verhältnismässig kleinem Konstruktionsaufwand, niederen Herstellungskosten und robuster Bauweise eine sehr grosse Messgenauigkeit erlaubt bei gleichzeitig weitgehender Vermeidung bzw. Kompensation von Störeinflüssen.

Es ist insbesondere Aufgabe der Erfindung, einen Messkopf für ein solches Stimmgabelquarz-Manometer zu schaffen, der Temperatureffekte auf den Quarz bei tiefen Drücken möglichst vermeidet bzw. gut kompensiert, eine gut definierte Halterung des Quarzes gewährleistet um Störeinflüsse zu verringern, der einen kompakten, gut abgeschirmten Aufbau ermöglicht, der äussere Störeinflüsse elektrischer und mechanischer Art verhindert und bereits in der Messschaltung die Messempfindlichkeit im unteren Druckbereich gegenüber jener einer linearen Schaltung erhöht.

Diese Aufgabe wird durch die im kennzeichnenden Teil des Patentanspruches 1 genannten Merkmale gelöst.

Die Erfindung basiert auf einer besonders vorteilhaften Anordnung des Quarzes und der elektrischen Schaltung, auf einer speziellen Ausgestaltung der Halterung und anderer Elemente des Manometers sowie einer geeigneten Materialwahl. Die erfindungsgemässe Anordnung der Bauteile sowie der Ausgestaltung der elektrischen Schaltung bewirkt eine weitgehende Vermeidung von Störeinflüssen.

Anhand der nachfolgenden Figuren ist ein Ausführungsbeispiel der Erfindung näher erläutert.

Fig. 1     zeigt den Aufbau eines erfindungsgemässen Messkopfs;

Fig. 2     zeigt die elektrisch/elektronische Messschaltung; und

Fig. 3     zeigt temperaturkompensierende Elemente der Messschaltung.

Fig. 4     zeigt ein Prinzipschema der Rückkopplungsschaltung mit Transistoren als regelbares Element

Die bisher vorgeschlagenen Konzepte für Stimmgabel-Manometer können die einleitend genannten Nachteile nicht vermeiden. Der Grund dafür liegt insbesondere auch darin, dass dem Gesichtspunkt der Halterung des Quarzes in bisherigen Arbeiten kaum Beachtung geschenkt wurde.

Es zeigt sich, dass die Art und Weise der Halterung des Quarzes einen massgeblichen Einfluss auf die Schwingungsenergie des Quarzes besitzt. Es erweist sich, dass denjenigen Halterungen Vorzug zu geben ist, die keine Schwingungsenergie des Quarzes absorbieren, d.h. ideal starre oder ideal elastische Halterungen.

Daneben äussert sich die geringe Leistungsumsetzung im Quarz in wesentlichen Schwierigkeiten wenn Störungseinflüsse, bspw. HF-Entladungen und Plasma im Rezipienten (Messvolumen), auf das Messvolumen einwirken. Minimale Leitungslängen zwischen Quarz und Messschaltung sowie eine gute Abschirmung sind deshalb anzustreben.

Aufgrund der geschilderten Probleme zeigt sich, dass bei solchen Stimmgabelquarz-Manometern die geometrischen und schaltungsmässigen Prinzipien eine vorrangige Beachtung erfordern. Gerade dieser Tatsache messen aber herkömmliche Vorrichtungen keine oder nur eine sehr geringe Bedeutung zu.

Der Erfindung liegt die Idee zu Grunde, dass die einem Stimmgabelquarz inhärenten Probleme bei der Druckmessung durch die *Einpassung* bzw. *Eingliederung* in die Messschaltung bzw. den Messkopf weitgehend an der Quelle vermieden werden bzw. Störeinflüsse weitgehend ausgeschaltet werden können, *bevor* sie auf den Quarz einwirken. Es erweist sich, dass hiefür das elektrische und mechanische Konzept aufeinander abgestimmt werden muss. Es muss mit anderen Worten die elektrische Schaltung so gestaltet werden, dass die konstruktiven Massnahmen am Messkopf ausgenutzt werden bzw. die Schaltung die konstruktiven Merkmale unterstützt.

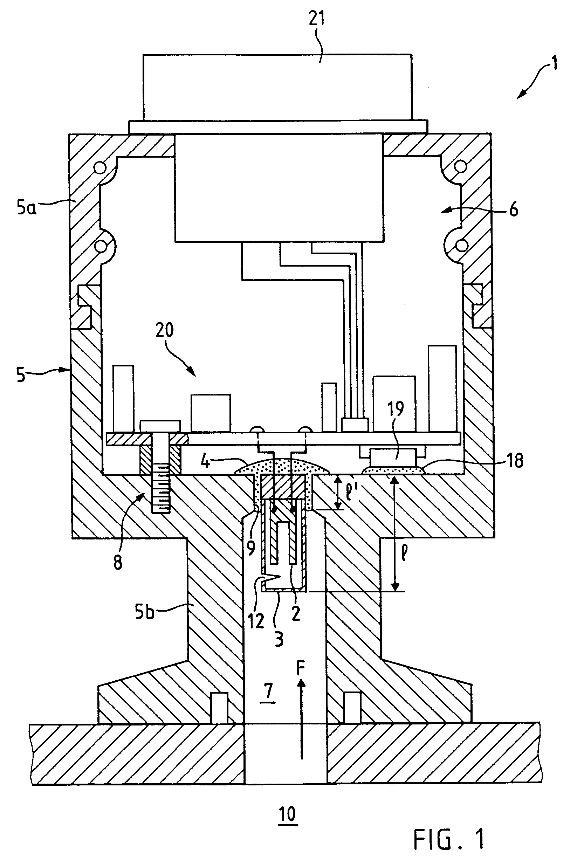

In Figur 1 ist ein erfindungsgemässer Messkopf in seinem prinzipiellen Aufbau dargestellt. Der Messkopf 1 besitzt ein Gehäuse 5, das in einer möglichen Ausführungsform vorliegend aus zwei Gehäuseteilen 5a, 5b gebildet wird und im wesentlichen einen Raum 6 und einen Messraum 7 umschliesst. Dieser Messraum 7 steht mit einem Rezipienten 10 bzw. der Messumgebung in Verbindung. Geometrie und Abmessungen des Messkopfes können variieren. Der Gehäuseteil 5b ist als Messflansch mit der notwendigen Gehäusewandstärke ausgestaltet und umschliesst den Messraum 7. Der obere Gehäuseteil 5a, der den unter Atmosphärendruck stehenden Raum 6 abschliesst, kann bspw. aus Kunststoff gefertigt sein. In dieser Ausführungsform besitzt der obere Teil des Gehäuses einen Durchmesser von ca. 3 cm.

Der Raum 6 enthält eine elektrische bzw. elektronische Schaltung 20 und ist gegenüber dem Messraum 7 abgedichtet. Die vor der Montage vorhandene Öffnung 9 im unteren Gehäuseteil 5b dient dem Einbau des Stimmgabelquarzes und wird in nachfolgend beschriebener Weise abgedichtet. In die Öffnung 9 ist der Stimmgabelquarz 2 mit seinem zylindrischen Schutzgehäuse 3 eingesetzt. Der Art und Weise der Befestigung des Schutzgehäuses in dieser Öffnung 9 kommt eine grosse Bedeutung zu, da durch geeignete Montage Vorteile in zweierlei Hinsicht erreicht werden können. Die Wandstärke des Gehäuseteils 5b bzw. des Messflansches ist im Bereich der Öffnung 9 so ausgestaltet, dass das eingesetzte Schutzgehäuse in einer geeigneten Länge $\ell'$ mit dem Gehäuseteil 5b verbunden wird. Die Verbindung zwischen dem Schutzgehäuse 3 des Stimmgabelquarzes und dem Messflansch wird mit einer Vergussmasse 4 erreicht. Diese Verbindung mittels der Vergussmasse 4 ist so ausgestaltet, dass der Messraum 7 gegenüber dem Raum 6 dicht ist, d.h. die Druckverhältnisse in den Räumen 6, 7 voneinander unabhängig sind.

Im Hinblick auf die Dämpfung des Gehäuses bzw. des Stimmgabelquarzes besteht die Möglichkeit, die Verbindung mit dem Messflansch mit einer sehr grossen oder einer sehr kleinen dynamischen Steifigkeit auszubilden. Aus konstruktiven Gründen wird vorzugsweise eine hohe Steifigkeit angestrebt, bspw. durch Verwendung eines Epoxyharzes oder eines Lotes. Eine relativ geringe dynamische Steifigkeit kann demgegenüber durch eine Silikonverbindung erzielt werden. Zu beachten ist, dass bei der Materialwahl berücksichtigt werden muss, dass aggressive bzw. chemisch reaktive Stoffe in den Messraum eindringen und damit mit der Vergussmasse in Kontakt kommen können, so dass grundsätzlich vor allem inerte Stoffe zur Verbindung von Schutzgehäuse und Messflansch in Frage kommen. Bei der Materialwahl ist das bereits erwähnte Problem der durch Temperatureinflüsse auf den Stimmgabelquarz einwirkenden Störungen zu berücksichtigen. Die Temperaturschwankungen des Schutzgehäuses 3 und des Stimmgabelquarzes 2 können optimal ausgeglichen werden, wenn der Messkopf durch eine möglichst ideale thermische Verbindung mit jenen als grosse thermische Senke bzw. Quelle wirken kann. Selbstverständlich ist es vorteilhaft, wenn der Messkopf selber, mindestens im Bereich des Stimmgabelquarzes, eine gute thermische Leitfähigkeit besitzt. Metallegierungen eignen sich in dieser Beziehung wegen ihrer hohen Wärmeleitfähigkeit besonders gut als Vergussmasse 4. Im Hinblick darauf, dass die elektrischen Kontakte des Schwingquarzes durch die Vergussmasse 4 geführt sind, sind jedoch Kunststoffe mit hoher Wärmeleitzahl vorzuziehen. Die Steifigkeit kann neben einer geeigneten Materialwahl durch die Geometrie der Öffnung 9, des Schutzgehäuses 3 und der Vergussmasse 4 beeinflusst werden. In besonderen Ausführungsformen kann die Vergussmasse 4 auch als Montageelement ausgebildet sein, bspw. als Rohrabschnitt in den das Schutzgehäuse 3 mit dem Stimmgabelquarz 2 eingepasst ist, oder Teil des Gehäuseteils 5b bilden. Ein solches Montageelement kann seinerseits in den Messflansch dichtend eingebaut werden. Es ist auch möglich, das Schutzgehäuse 3 des Stimmgabelquarzes so auszubilden, dass dieses direkt in einen Passitz im Messflansch eingesetzt werden kann, was zu guten Eigenschaften bezüglich der Starrheit der Verbindung führt.

Die geringe Fuge, die im dargestellten Ausführungsbeispiel zwischen der Schutzkammer 3 und dem Gehäuseteil 5b ersichtlich ist, trägt zu einer hohen Steifigkeit bzw. einer starren Verbindung zwischen Messkopf und Stimmgabelquarz bei. Das Schutzgehäuse 3 wird - soll eine möglichst starre Verbindung mit dem Gehäuseteil 5b erreicht werden - mit mindestens einem Zehntel seiner Gesamtgehäuselänge $\ell$ mittels der Vergussmasse 4 starr in der Öffnung 9 befestigt. Bei Abmessungen des Schutzgehäuses mit einem Durchmesser von ca. 3 mm und einer Länge von 5 und mehr Millimetern besteht durch diese Massnahme eine Verbindungslänge $\ell'$ von 2-3 mm, so dass eine sehr geringe Dämpfung des Quarzes resultiert.

Das Schutzgehäuse 3 für den Schwingquarz umschliesst diesen bis auf eine Öffnung 12 und schützt den Quarz vor Verschmutzung und Druckstössen, die auf den Messraum 7 einwirken. Dazu ist die Öffnung 12 seitlich am Schutzgehäuse angeordnet, damit vom Rezipienten 10 in Richtung des Pfeiles F keine lichte Öffnung besteht und so schädliche Druckeinwirkungen auf den Stimmgabelquarz bei schnellen Druckschwankungen einwirken können.

Die Messschaltung 20 ist im Messkopf selber, direkt über dem Stimmgabelquarz 2 bzw. dessen Schutzgehäuse 3 vorgesehen. Grund dafür sind einerseits möglichst gleiche Temperaturverhältnisse für Quarz und Messschaltung und andererseits das Erreichen minimaler Leitungslängen zwischen Messschaltung und Quarz. Gleichzeitig ist die HF-Schaltung gegenüber dem Rezipienten leicht und gut abschirmbar. Da der Quarz 2 nur sehr geringe Leistungen aufnimmt und nur sehr kleine Leistungsschwankungen aufweist, können Störeffekte über die Messleistungen grossen Einfluss haben und die Messung verfälschen. Besondere Schwierigkeiten bereitet die Tatsache, dass im Rezipienten, bspw. während eines Beschichtungsvorganges in einer Vakuumkammer, HF-Entladungen und Plasma vorhanden sein können. Die Anordnung der Messschaltung 20 unmittelbar über dem Quarzgehäuse 3 trägt diesen Aspekten Rechnung. Um ausserdem möglichst identische Temperaturen für die Messschaltung 20 und den Quarz 2 erreichen zu können, wird die Messschaltung mit gut wärmeleitenden Verbindungen 8 am Messflansch, d.h. am gleichen Gehäuseteil 5b wie der Quarz 2 und möglichst nahe bei diesem befestigt.

Im günstigsten Fall bewirken die wärmeleitenden Verbindungen 8 sowie die Vergussmasse 4 einen identischen Temperaturverlauf der Messschaltung 20 und des Quarzes 2. Durch geeignete Materialwahl und Anordnung der Montageelemente und Baugruppen können die erfindungsgemäss zwischen der Messschaltung und dem Stimmgabelquarz vorgesehenen Wärmebrücken, die im vorliegenden Beispiel durch die Vergussmasse 4, den Körper des Gehäuseteils 5b und den Verbindungen 8 gebildet werden, optimiert werden und so Temperaturdifferenzen zwischen diesen vermieden werden. Dadurch werden die temperaturmässig relevanten Bauelemente (elektrische und mechanische) weitgehend in einem thermodynamischen Gleichgewicht zu halten.

Aus den bisherigen Ausführungen geht hervor, dass der erfindungsgemässe Aufbau des Messkopfes sowohl dämpfungs- als auch temperaturbedingte Fehler sowie allfällig im Rezipienten auftretende Störeinflüsse weitgehend vermeidet. Dies bildet Grundlage für die elektrische Ausgestaltung der Messschaltung. Elemente der Messschaltung, die temperaturkompensierende Einflüsse ausüben oder die temperaturmässig beeinflusst werden, werden vorzugsweise direkt über dem Stimmgabelquarz 2 angeordnet und mit einer speziellen Wärmebrücke 18 versehen. Im vorliegenden Ausführungsbeispiel ist die Messschaltung 20 auf eine Printplatte aufgebracht und ein temperaturkompensierendes Element 19 an deren Unterseite vorgesehen. Durch die wärmeleitende Verbindung 18 ist dieses Element 19 temperaturmässig optimal mit dem Stimmgabelquarz gekoppelt. Dabei ist als temperaturmässige Koppelung eine Verbindung mittels einem Material mit hoher Wärmeleitzahl zu verstehen, d.h. einem guten Wärmeleiter.

Wie aus Figur 1 ersichtlich ist, besitzt das vorliegende Ausführungsbeispiel im wesentlichen zwei Wärmebrücken 8, 18. Um die thermische Leitfähigkeit zu erhöhen, können mehrere solcher wärmeleitenden Verbindungen vorgesehen werden oder die Schaltung direkt mit einem wärmeleitenden Körper verbunden oder in diesen eingegossen bzw. montiert sein. Dieser Körper kann seinerseits Bestandteil des unteren Gehäuseteils 5b oder grossflächig mit diesem verbunden sein.

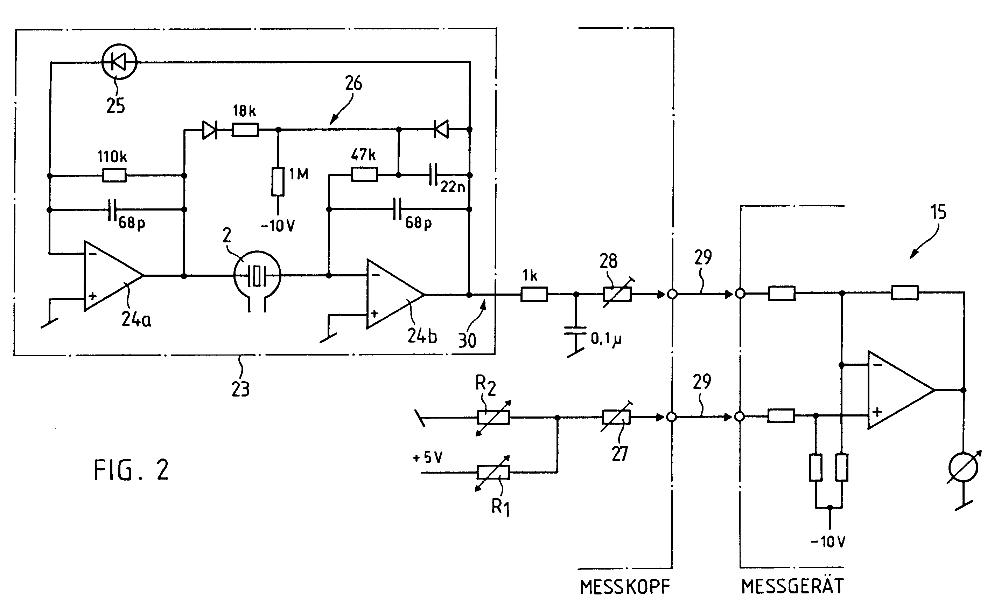

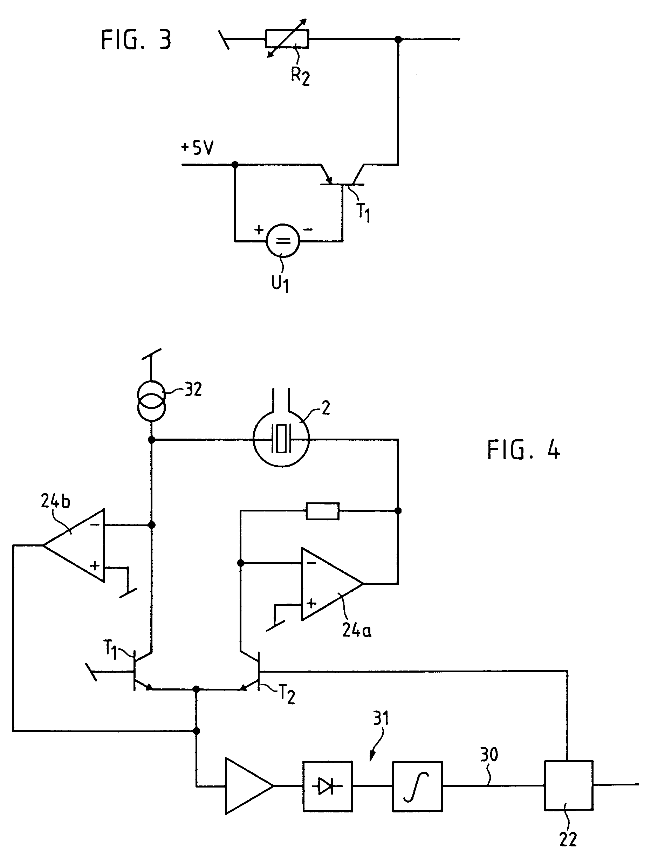

In Figur 2 ist ein Ausführungsbeispiel der Messschaltung dargestellt. Der detaillierte Aufbau der Schaltung ist ohne weiteres der Figur zu entnehmen, so dass im folgenden nur deren funktionelles Prinzip näher erklärt wird. Die Grundschaltung 23 besteht aus einer selbstschwingenden Rückkopplungsschaltung. Gegenüber nicht selbstschwingenden Schaltungen besteht der Vorteil, dass ein geringerer Schaltungsaufwand erforderlich ist. Bspw. könnte auch eine PLL-Schaltung verwendet werden, die jedoch in dieser Anwendung Probleme bezüglich Einschwingen und Stabilisierung mit sich bringt. Der Stimmgabelquarz 2 ist, wie aus Figur 2 ersichtlich ist, zwischen zwei Operationsverstärker 24a, 24b geschaltet. Der Ausgang des zweiten Operationsverstärkers ist über einen Rückkopplungspfad auf den einen Eingang des ersten Operationsverstärkes zurückgeführt. Dieser Rückkopplungspfad enthält eine Kapazitäts-Diode 25 deren Vorspannung über einen Regelkreis 26 gesteuert wird. Anstelle einer Kapazitätsdiode können in entsprechender Weise auch ein oder mehrere Transistoren oder andere Regelelemente verwendet werden (vgl. Fig. 4). Die Regelung bewirkt, dass die Verstärkung über den Rückkopplungskreis bei Resonanzfrequenz des Stimmgabelquarzes exakt gleich 1 ist. Die notwendige Regelspannung wird als Messgrösse für die Druckschwankungen benutzt, über eine Klemme 30 einer entsprechenden Auswertschaltung bzw. einem Messgerät 15 zugeführt und angezeigt. Der Vorteil der Verwendung dieser Regelspannung liegt darin, dass die Kapazitätsdiode bzw. der Transistor einen logarithmierenden Effekt auf das Messignal hat und damit im tiefen Druckbereich eine erhöhte Empfindlichkeit erreicht werden kann. Zur Einstellung des Nullpunktes (HV-Wert; d.h. Abgleichen auf den Seriewiderstandes des Quarzes bei Hochvakuum) und der Empfindlichkeit (Atmosphären-Wert; d.h. Abgleich der Messskala für den zu messenden Druckbereich) sind zwei Regler, bspw. Potentiometer 27, 28 vorgesehen. Für den Anschluss des Messgeräts 15 bzw. einer Auswertschaltung sind Anschlüsse 29 vorgesehen.

Der Widerstand $R_1$ ist ein temperaturabhängiger Widerstand mit stark negativem Temperaturkoeffizienten (NTC-Widerstand):

$$R_1 = R_{1_0} \cdot e^{B/T}$$

Es ist ersichtlich, dass der NTC-Widerstand erfindungsgemäss aus der selbstschwingenden Schaltung ausgelagert ist und damit nicht mit der hochfrequenten Schwingung (bspw. 30 kHz) des Quarzes beaufschlagt ist. Dieser NTC-Widerstand $R_1$ dient dem Erfassen der Temperatur durch die Messschaltung indem die durch Temperaturschwankungen verursachten Änderungen des inneren Widerstandes des Schwingquarzes schaltungsmässig kompensiert werden. Der NTC-Widerstand ist so geschaltet, dass der quadratische Term der durch Temperaturschwankungen verursachten Fehler näherungsweise kompensiert wird. Durch ein zusätzliches Schaltungselement $R_2$ können die linearen Fehler des HV-Wertes ebenfalls kompensiert werden. $R_2$ ist in diesem Beispiel ein metallischer Widerstand mit schwach positivem Temperaturkoeffizienten:

$$R_2 = R_{2_0} \cdot (1+\alpha t).$$

Sowohl $R_1$ als auch $R_2$ sind in thermischem Kontakt mit dem Stimmgabelquarz 2. Die HF-mässige Entkoppelung des NTC-Widerstandes erlaubt es, diesen thermisch optimal zu plazieren ohne dass Probleme durch lange Leitungsabschnitte verursacht würden.

In Figur 3 ist ein Beispiel einer Schaltungsgruppe dargestellt, die anstelle der beiden Widerstände $R_1$ und $R_2$ eingesetzt werden kann und der Temperaturkompensation dient. $R_2$ ist ein Widerstand wie im Ausführungsbeispiel gemäss Figur 2. Anstelle von $R_1$ wird ein Transistor und eine Gleichspannungsquelle $U_1$ eingesetzt. $R_2$ und $T_1$ sind wiederum in thermischem Kontakt mit dem Stimmgabelquarz.

Die erfindungsgemässe Ausgestaltung des Messkopfes und des Messprinzips bewirken unter anderem, dass die HF-Schaltung komplett im Messkopf untergebracht ist und gleichzeitig kurze Leitungen und eine geringe Störanfälligkeit aufweist. Die Schaltung im Messkopf ist klein, stabil und billig herstellbar, wobei sie abgleichbar ist und damit ein Austauschen der Messköpfe zulässt. Störungen durch Temperatureinflüsse können kompensiert werden ohne dass eine Temperaturstabilisierung des Quarz es erforderlich wäre.

Die Referenzzahl 21 (Fig. 1) bezeichnet einen Stecker für Anschlüsse und Klemmen für ein externes Messgerät. Selbstverständlich können im Bereich dieses Steckers oder im Raum 6 auch weitere Schaltungselemente für die Messschaltung befinden, z.B. Bedienungs- und Abgleichelemente sowie Anschlüsse 29 (Fig. 2) die von aussen zugänglich sein müssen.

Figur 4 zeigt zur Veranschaulichung ein weiteres Ausführungsbeispiel der Rückkopplungsschaltung unter Verwendung von Transistoren als regelbares Element. Der Quarz 2 ist wiederum zwischen zwei Operationsverstärker 24a, 24b geschaltet. Eine Stromquelle 32 liefert den den notwendigen Strom um den Arbeitspunkt der Schaltung zu gewährleisten. Zwei Transistoren $T_1$, $T_2$ sind in den Rückkopplungspfad geschaltet und bilden das regelbare Schaltungselement. Die Regelung erfolgt bspw. über einen PI-Regler 31, wobei die über einen Ausgang 30 abgenommene Regelspannung als Messgrösse bzw. Dämpfungssignal verwendet wird. Der Vorteil dieser Schaltung liegt darin, dass eine sehr gute, definierte logarithmische Abhängigkeit des Dämpfungssignals vom Seriewiederstand des Quarzes erhalten wird (Dämpfungssignal proportional log $R_{Quarz}$). Gegenüber Kapazitätsdioden, deren Kennlinien herstellungsbedingten Abweichungen unterliegen, besitzt die Lösung mit Transistoren den Vorteil, dass deren Kennlinien physikalisch bedingt einen gut logarithmischen und definierten Verlauf aufweisen. Das Dämpfungssignal wird, wie aus der Figur ersichtlich ist, einem Temperatur-Korrekturnetzwerk 22 zugeführt.

Die erfindungsgemässe Verwendung einer Messschaltung mit einer Rückkopplungsschaltung mit dem Schwingquarz und eines schaltungsmässig separaten Temperatur-Korrekturnetzwerkes, das nota bene temperaturmässig mit dem Schwingquarz gekoppelt ist, erlaubt eine Anordnung der Schaltung ohne lange, mit HF beaufschlagten Leitungen.

Für besondere Anwendungen können zusätzliche elektrische/elektronische Schaltungen oder Schaltungselemente im Messkopf eingebaut sein oder über die Anschlüsse der Schaltungselemente 21 mit der Messschaltung 20 verbunden sein. Die anhand von Figur 2 beschriebene Messschaltung kann im Rahmen der Erfindung in weiten Teilen variiert werden, ohne dass dadurch das erfindungsgemässe Prinzip verlassen würde.

Wesentlich ist, dass die Schaltung Elemente zur Kompensation der durch - trotz dem erfindungsgemässen Aufbau des Messkopfes verbleibenden - Temperaturschwankungen verursachten Fehler enthält und diese über Wärmebrücken in möglichst idealem Kontakt zum Schwingquarz stehen und zu diesem eine gleichlaufenden Temperaturverlauf aufweisen. Von Bedeutung ist darüber hinaus die Ausgliederung dieser temperaturkompensierenden Elemente aus der HF-Schaltung (Reduktion der Probleme hinsichtlich Leitungslängen, Abschirmung, Verluste). Durch geeignete Anordnung dieser Elemente am Messkopf können die Temperaturschwankungen minimiert werden.

Im dargestellten Beispiel sind der Stimmgabelquarz 2 und die Messschaltung 3 wärmeleitend mit dem Gehäuseteil 5b verbunden. Wie oben ausgeführt, kann das Gehäuse auf diese Weise temperaturausgleichend auf diese Elemente einwirken. Für spezielle Anwendungen, insbesondere wenn der Messkopf in einer Umgebung mit häufigen Temperaturschwankungen eingesetzt wird, kann ein solcher thermischer Kontakt zum Gehäuse einen nachteiligen Einfluss ausüben. In solchen Fällen können die Messschaltung 3 und der Stimmgabelquarz 2, die über eine Wärmebrücke miteinander verbunden sind, wärmeisoliert in das Gehäuse eingesetzt werden. Dazu kann beispielsweise eine gemeinsame Halterung vorgesehen werden, die bspw. die Trennwand zwischen dem Raum 6 und dem Messraum 7 bilden kann. Dadurch sind diese Bauteile unabhängig von Temperaturschwankungen, die auf die Gehäuseaussenseite Einfluss nehmen, wobei aber das erfindungsgemässe Ziel einer thermischen Koppelung von Stimmgabelquarz und Messschaltung erhalten bleibt.

Da die erfindungsgemässe Messonde ohne zusätzliche Massnahmen bereits eine grosse Präzision erreicht, eignet sie sich besonders für den wirtschaftlichen Einsatz im Zusammenhang mit Messverfahren, wie sie in zwei Patentanmeldungen derselben Anmelderin (gleiches Anmeldedatum) beschriben sind, und können damit eine noch grössere Messgenauigkeit erreichen.

## Patentansprüche

1. Stimmgabelquarz-Manometer mit einem in einem Schutzgehäuse gehalterten Stimmgabelquarz, der seinerseits Teil einer selbstschwingenden Rückkoppelungsschaltung ist, **dadurch gekennzeichnet**, dass das Schutzgehäuse (3) mittels einer Vergussmasse (4) oder direkt in das Gehäuse eines Messkopfes (1) oder eine Halterung eingesetzt ist und dass eine Messschaltung (20) direkt im Messkopf nahe dem Stimmgabelquarz (2) angeordnet und temperaturmässig mit letzterem gekoppelt ist.

2.  Stimmgabelquarz-Manometer nach Anspruch 1, **dadurch gekennzeichnet**, dass die Messschaltung (20) mittels wärmeleitender Verbindungen (8) mit dem Gehäuse (5b) verbunden ist und die Verbindungen (8), die Vergussmasse (4) und das Gehäuse (5b) eine Wärmebrücke zwischen der Messschaltung und dem Stimmgabelquarz (2) bilden.

3.  Stimmgabelquarz-Manometer nach Anspruch 1, **dadurch gekennzeichnet**, dass die Halterung wärmeisoliert im Gehäuse (5a, 5b) befestigt ist und die Verbindungen (8), die Vergussmasse (4) und die Halterung eine Wärmebrücke zwischen der Messschaltung und dem Stimmgabelquarz (2) bilden.

4.  Stimmgabelquarz-Manometer nach einem der vorstehenden Ansprüche, **dadurch gekennzeichnet**, dass das Schutzgehäuse (3) über mindestens 1/10 seiner Länge ($l$) mit dem Gehäuse (1) oder der Halterung starr verbunden ist.

5.  Stimmgabelquarz-Manometer nach einem der vorstehenden Ansprüche, **dadurch gekennzeichnet**, dass die Messschaltung mindestens ein temperaturabhängiges Element ($25, R_1, R_2, T_1, U_1$) enthält, das mit dem Stimmgabelquarz (2) temperaturmässig gekoppelt ist.

6.  Stimmgabelquarz-Manometer nach Anspruch 5, **dadurch gekennzeichnet**, dass mindestens ein temperaturabhängiges Element in einem Temperatur-Korrekturnetzwerk enthalten ist, das HF-mässig von dem den Stimmgabelquarz enthaltenden Rückkopplungskreis (23) entkoppelt ist.

7.  Stimmgabelquarz-Manometer nach Anspruch 5 oder 6, **dadurch gekennzeichnet**, dass der Regelspannungsausgang (30) des Rückkopplungskreises (23) einerseits und der Ausgang eines mindestens einen temperaturabhängigen NTC-Widerstand ($R_2$) enthaltenden Spannungsteilers andererseits je einer Klemme (29) zu einem Messgerät zugeführt sind.

8.  Stimmgabelquarz-Manometer nach einem der vorstehenden Ansprüche, **dadurch gekennzeichnet**, dass die Rückkopplungsschaltung eine Kapazitäts-Diode (25) mit verstellbarer Vorspannung zur Regelung der Rückkopplung enthält.

9.  Stimmgabelquarz-Manometer nach einem der Ansprüche 1 bis 7, **dadurch gekennzeichnet**, dass die Rückkopplungsschaltung einen oder mehrere Transistoren ($T_1, T_2$) zur Regelung der Rückkopplung enthält.

10. Verfahren zur Druckmessung mittels einem Stimmgabel-Quarz-Manometer nach Anspruch 8, **dadurch gekennzeichnet**, dass die Vorspannung der Kapazitäts-Diode (25) über einen Regelkreis so gesteuert wird, dass die Verstärkung des Rückkopplungskreises (23) bei Resonanzfrequenz des Stimmgabelquarzes (2) mindestens annähernd gleich 1 ist und dass die Regelspannung als druckabhängige Messgrösse einer Auswertungs- und Anzeigeschaltung eines Messgerätes (15) zugeführt wird und als in Druckeinheiten eichbare Messwertausgabe angezeigt wird.

11. Verfahren zur Druckmessung mittels einem Stimmgabel-Quarz-Manometer nach Anspruch 9, **dadurch gekennzeichnet**, dass der oder die Transistoren ($T_1, T_2$) über einen Regelkreis so gesteuert werden, dass die Verstärkung des Rückkopplungskreises (23) bei Resonanzfrequenz des Stimmgabelquarzes (2) mindestens annähernd gleich 1 ist und dass die Regelspannung als druckabhängige Messgrösse einer Auswertungs- und Anzeigeschaltung eines Messgerätes (15) zugeführt wird und als in Druckeinheiten eichbare Messwertausgabe angezeigt wird.

**Claims**

1.  Tuning fork manometer with a tuning fork quartz mounted in a protective casing and which is in turn part of a self-oscillating feedback circuit, characterized in that the protective casing (3) is inserted either by means of a sealing compound (4) or directly into the casing of a measuring head (1) or a mounting support and that a measuring circuit (20) is located directly in the measuring head close to the tuning fork quartz (2) and is thermally coupled with the latter.

2.  Tuning fork quarts manometer according to claim 1, characterized in that the measuring circuit (20) is connected by heat conducting connections (8) to the casing (5b) and the connections (8), sealing compound (4) and casing (5b) form a heat bridge between the measuring circuit and the tuning fork quartz (2).

**3.** Tuning fork quarts manometer according to claim 1, characterized in that the mounting support is feed in thermally insulated manner in casing (5a, 5b) and the connections (8), sealing compound (4) and mounting support form a heat bridge between the measuring circuit and the tuning fork quartz (2).

**4.** Tuning fork quartz manometer according to one of the preceding claims, characterized in that the protective casing (3) is rigidly connected over at least 1/10 of its length (1) to the casing (1) or the mounting support.

**5.** Tuning fork quarts manometer according to one of the preceding claims, characterized in that the measuring circuit contains at least one temperature-dependent element (25, $R_1$, $R_2$, $T_1$, $U_1$), which is thermally coupled to the tuning fork quartz (2).

**6.** Tuning fork quartz manometer according to claim 5, characterized in that at least one temperature-dependent element is contained in a temperature correction network, which is decoupled from the high frequency standpoint from the feedback circuit (23) containing the tuning fork quartz.

**7.** Tuning fork quartz manometer according to claims 5 or 6, characterized in that the control voltage output (30) of the feedback circuit (23) on the one hand and the output of a voltage divider containing at least one temperature-dependent NTC-resistor ($R_2$) on the other are supplied in each case to one terminal (29) of a measuring instrument.

**8.** Tuning fork quartz manometer according to one of the preceding claims, characterized in that the feedback circuit contains a capacitance diode (25) with an adjustable bias for regulating the feedback.

**9.** Tuning fork quartz manometer according to one of the claims 1 to 7, characterized in that the feedback circuit contains one or more transistors ($T_1$, $T_2$) for regulating the feedback.

**10.** Process for measuring pressure by means of a tuning fork quartz manometer according to claim 8, characterized in that the bias of the capacitance diode (25) is so controlled across a control loop, that the gain of the feedback circuit (23) at the resonant frequency of the tuning fork quartz (2) is at least approximately equal to 1 and that the control voltage is supplied as a pressure-dependent measurement quantity to an evaluating and indicating circuit of a measuring instruct (15) and is indicated or displayed as a measured value output calibratable in pressure units.

**11.** Process for measuring pressure by means of a tuning fork quartz manometer according to claim 9, characterized in that the transistor or transistors ($T_1$, $T_2$) are so controlled across a control loop, that the gain of the feedback circuit (23) at resonant frequency of the tuning fork quartz (2) is at least approximately equal to 1 and that the control voltage is supplied as a pressure-dependent measured quantity to an evaluating and indicating circuit of a measuring instrument (15) and is indicated or displayed as a measured value output calibratable in pressure units.

## Revendications

**1.** Manomètre à quartz à diapason comportant un quartz à diapason maintenu à l'intérieur d'un boîtier protecteur, ce quartz, pour sa part, étant une partie d'un circuit de réinjection auto-oscillant, caractérisé en ce que le boîtier de protection (3) est inséré, au moyen d'une masse de scellement (4) ou directement dans le boîtier d'une sonde de mesure (1) ou d'un support, et en ce qu'un circuit de mesure (20 est disposé directement dans la sonde à proximité du quartz (2) et thermiquement couplé à ce dernier.

**2.** Manomètre à quartz à diapason selon la revendication 1, caractérisé en ce que le circuit de mesure (20) est relié au boîtier (5b) au moyen de connexions thermocondutibles (8) et que lesdites connexions (8), la masse de scellement (4) et le boîtier (5b) forment un pont thermique entre le circuit de mesure et le quartz à diapason (2).

**3.** Manomètre à quartz à diapason selon la revendication 1, caractérisé en ce que le support est fixé à l'intérieur du boîtier (5a, 5b) de manière thermo-isolante et que les connexions (8), la masse de scellement (4) et le support forment un pont thermique entre le circuit de mesure et le quartz à diapason (2).

**4.** Manomètre à quartz à diapason selon l'une des revendications précédentes, caractérisé en ce que le boîtier de protection (3) est relié de manière rigide sur au moins un dixième de sa longueur ($\ell$) au boîtier (1) ou au support.

**5.** Manomètre à quartz à diapason selon l'une des revendications précédentes, caractérisé en ce que le circuit de mesure contient au moins un élément thermo-dépendant (25, $R_1$, $R_2$, $T_1$, $U_1$), lequel est couplé thermiquement au quartz à diapason (2).

**6.** Manomètre à quartz à diapason selon la revendication (5), caractérisé en ce qu'au moins un élément thermo-dépendant est contenu dans un réseau correcteur de la température, lequel est découplé, en ce qui concerne la HF, d'un circuit de réinjection (23) contenant le quartz à diapason.

**7.** Manomètre à quartz à diapason selon la revendication 5 ou 6, caractérisé en ce que la sortie de la tension de régulation (30) du circuit de réinjection (23), d'une part, et la sortie d'un diviseur de tension contenant au moins une résistance NTC ($R_2$) thermo-dépendante, d'autre part, sont amenées chacune vers une borne (29) allant à un instrument de mesure.

**8.** Manomètre à quartz à diapason selon l'une des revendications précédentes, caractérisé en ce que le circuit de réinjection contient une diode capacitive (25) à pré-tension réglable pour la régulation de la réinjection.

**9.** Manomètre à quartz à diapason selon l'une des revendications 1 à 7, caractérisé en ce que le circuit de réinjection contient un ou plusieurs transistors ($T_1$, $T_2$), pour la régulation de la réinjection.

**10.** Procédé pour la mesure d'une pression au moyen d'un manomètre à quartz à diapason selon la revendication 8, caractérisé en ce que la pré-tension de la diode capacitive (25) est pilotée par un circuit de réglage de telle sorte que l'amplification du circuit de réinjection (23) à la fréquence de résonance du quartz (2) est au moins approximativement égale à 1 et que la tension de régulation est amenée, sous la forme d'une grandeur mesurée fonction de la pression, à un circuit d'analyse et d'indication d'un instrument de mesure (15) et est affichée sous la forme d'une édition d'une valeur mesurée pouvant être étalonnée en unités de pression.

**11.** Procédé pour mesurer une pression au moyen d'un manomètre à quartz à diapason selon la revendication 9, caractérisé en ce que le ou les transistors ($T_1$, $T_2$) sont pilotés par un circuit de réglage de telle sorte que l'amplification du circuit de réinjection (23), à la fréquence de résonance du quartz (2), est au moins approximativement égale à 1 et que la tension de réglage est amenée sous la forme d'une grandeur mesurée fonction de la pression à un circuit d'analyse et d'indication d'un instrument de mesure et affichée sous la forme de l'édition d'une valeur mesurée pouvant être étalonnée en unités de pression.

EP 0 379 839 B1

FIG. 1

FIG. 2

MESSKOPF          MESSGERÄT

EP 0 379 839 B1

FIG. 3

FIG. 4